# EUROPÄISCHE PATENTSCHRIFT

(11) **EP 2 486 634 B1**
(45) Veröffentlichungstag und Bekanntmachung des Hinweises auf die Patenterteilung: **28.10.2015**
(21) Anmeldenummer: 10737782.2
(22) Anmeldetag: 23.07.2010
(51) Int. Cl.: H02G 3/06

(54) **KABELVERSCHRAUBUNG FÜR EIN ABGESCHIRMTES KABEL**
CABLE GLAND FOR A SHIELDED CABLE
PRESSE-ÉTOUPE POUR CÂBLE BLINDÉ

(30) Priorität: 07.10.2009 DE 202009013522 U
(43) Veröffentlichungstag der Anmeldung: 15.08.2012
(73) Patentinhaber: HUMMEL AG, 79211 Denzlingen (DE)
(72) Erfinder: BARTHOLOMÄ, Mario, 79297 Winden (DE); ZÜGEL, Fritz, 79183 Waldkirch (DE); GÖTZ, Volker, 79341 Kenzingen (DE); HOCH, Achim, 79183 Waldkirch (DE)
(74) Vertreter: Kunst, Manuel Nikolaus Johannes
(86) Internationale Anmeldenummer: PCT/EP2010/004525
(87) Internationale Veröffentlichungsnummer: WO 2011/042078

(56) Entgegenhaltungen:
- EP-A2- 1 783 876
- EP-B1- 1 526 620
- DE-C1- 19 738 517
- GB-A- 2 126 803

## Beschreibung

Die Erfindung betrifft eine Kabelverschraubung für ein abgeschirmtes Kabel gemäß dem Oberbegriff des Patentanspruchs 1.

Eine derartige Kabelverschraubung ist aus der EP 1 784 876 A2 bekannt. Die dabei vorgesehenen Kontaktfinger haben in Ausgangsstellung eine Formgebung und Anordnung, durch welche sie in entspanntem Zustand vor dem Einführen des Kabels in dessen Bereich ragen, so dass sie durch das Zusammenstecken mit dem Kabel gegen eine Rückstellkraft radial nach außen geschwenkt und gebogen werden. Diese Rückstellkraft führt dazu, dass die Kontaktfinger an der Außenseite des Kabels und damit an der dort vorhandenen metallischen Abschirmung anliegen und eine Kontaktierung bilden. Die Kraft dieser Kontaktierung hängt also von dem Durchmesser des Kabels ab, das heißt ein dünneres Kabel wird nur mit schwächerer Kraft kontaktiert als ein dickeres und außerdem ist die Montage schwierig, weil das Kabel reibend durch den Bereich dieser Kontaktfinger hindurchgeschoben oder umgekehrt die Kontaktfinger über das Kabel geschoben werden müssen, was zu Beschädigungen führen kann. Ferner ist eine Demontage schwierig, weil die Kontaktfinger möglicherweise widerhakenartig auf die Kabeloberfläche und die dort vorhandene häufig netzförmige Abschirmung einwirken, die bei einem Zurückziehen des Kabels zerstört werden könnte.

Eine weitere Kabelverschraubung beschreibt die EP 1 526 620 B1. Bei der darin vorgesehenen Lösung werden die Kontaktfinger durch die axiale Verstellung des Klemmeinsatzes beim Anziehen der Überwurfmutter verformt und an der Außenseite des Kabels angedrückt. Dazu ist innerhalb der Schraubhülse ein zusätzliches Teil als Abstützelement erforderlich, welches als Widerlage für die Kontaktfinger dient, die mit ihrer Halterung relativ zu diesem Abstützelement verschoben werden müssen, was vor allem bei dünnen Kabeln einen relativ großen Verschiebeweg für den Klemmeinsatz erfordert.

Aus der GB 2126803 A ist eine Kabelverschraubung anderer Gattung bekannt, bei welcher eine ringförmige Kontaktaufrichtung vorgesehen ist, die durch das Anziehen einer Überwurfmutter gestaucht und dadurch mit ihren beiden beabstandeten Rändern gegen das Kabel angedrückt werden kann. Somit sind keine Kontaktfinger vorhanden.

Es besteht deshalb die Aufgabe, eine Kabelverschraubung gemäß dem Oberbegriff des Patentanspruchs 1 zu schaffen, bei welcher schon die übliche axiale Verschiebung des Klemmeinsatzes bei seiner Verklemmung mit dem Kabel ausreicht, um eine genügend große Verformung und Andrückkraft des oder der Kontaktfinger zu bewirken, die aber bei gelöstem Klemmeinsatz aufgrund der Rückstellkraft einen Abstand zu dem Kabel haben oder wieder erhalten. Dabei soll die Kabelverschraubung es ermöglichen, Kabel leicht ein- und auszuschieben, ohne dass dabei Kontaktfinger die Bewegung des Kabels behindern.

Diese Aufgabe wird mit den Mittelm und Merkmalen des Patentanspruchs 1 gelöst.

Die beiden Schrägflächen, nämlich einerseits die Anschlagfläche innerhalb der Schraubhülse und andererseits die mit dem Klemmeinsatz zusammenwirkende oder an diesem vorgesehene Schrägfläche, haben also in Ausgangsstellung einen Abstand zueinander, der beim Anziehen einer Überwurfmutter oder Schraubhülse verkleinert wird. Dies wird dazu ausgenutzt, den dazwischen befindlichen verformbaren Absatz der Kontakteinrichtung so zu verformen, dass die von diesem Absatz ausgehenden Kontaktfinger gegen das Kabel bewegt und angedrückt werden. Diese Bewegung ergibt sich dadurch, dass der Absatz gegenüber der zu der Schraubhülse gehörenden Anschlagfläche gewölbt ist, wobei der Abstand etwa in der Mitte dieser schrägen Anschlagfläche durch diese Wölbung oder auch eine eckige Formgebung am größten ist, so dass das Drücken mit Hilfe des Klemmeinsatzes die am Ende der schrägen Anschlagfläche aufliegenden Kontaktfinger zwangsläufig radial nach innen schwenkt.

Es genügt also ein relativ kurzer Verstellweg zwischen Klemmeinsatz und Anschlagfläche, um die gewünschte Verschwenkung des oder der Kontaktfinger zu dem Kabel hin zu bewirken, ohne dass die Kontakteinrichtung mit den Kontaktfingern selbst axial verstellt werden muß. Für die gewünschte Verstellung kann bei entsprechender Formgebung des verformbaren Absatzes eine Axialverstellung des Klemmeinsatzes schon um eine geringe Abmessung von Bruchteilen von nur einem oder wenigen Millimetern genügen.

Die schräge Anschlagfläche kann an einem innenseitigen Ring und/oder an einem Vorsprung oder Bund der Schraubhülse vorgesehen sein, der zumindest in der axialen Einsteckrichtung des Kabels fest oder sogar einstückig mit der Schraubhülse verbunden ist. Somit ist ein Nachgeben oder eine Axialverstellung der schrägen Anschlagfläche verhindert. Bei einstückiger Ausbildung an der Innenseite der Schraubhülse wird außerdem vermieden, dass ein zusätzliches Teil in der Kabelverschraubung angeordnet werden muß, welches gegebenenfalls verloren gehen könnte.

Die schräge Druckfläche zum Beaufschlagen des gewölbten oder eckig geformten Absatzes kann zweckmäßigerweise an der Stirnseite des Klemmeinsatzes unmittelbar angeformt sein. Wie erwähnt könnte zwar auch ein Druckring zwischen Klemmeinsatz und Absatz eingesetzt werden, jedoch vermeidet die Anbringung der schrägen Druckfläche unmittelbar an der Stirnseite des Klemmeinsatzes ein zusätzliches Teil.

Die schräge Anschlagfläche und/oder die schräge Druckfläche können im Längsschnitt geradlinig oder gekrümmt sein. Dabei ist eine geradlinige Ausbildung am einfachsten herstellbar, jedoch könnte eine konkave oder konvexe Krümmung die Effektivität der Verformung des Absatzes vergrößern je nach Wahl, an welcher der beiden Schrägflächen eine Balligkeit oder eine Einsenkung vorgesehen wird, wobei diese Krümmungen der Längsschnitte der schrägen Flächen auch als Vielecke ausgebildet sein könnten.

Eine günstige Ausführungsform kann vorsehen, dass die schräge Anschlagfläche und die schräge Druckfläche ringförmig umlaufend und parallel zueinander angeordnet sind. Dadurch ergibt sich dann zwischen diesen schrägen Flächen ein am Umfang gleichbleibender Abstand, der durch das Anziehen der Überwurfmutter verringert wird und den oder die Kontaktfinger zu einem Kabel hin verschwenkt. Dabei kann durch den Grad der Annäherung der beiden Schrägflächen die Größe dieses Verschwenkweges variiert werden, so dass auf einfache Weise eine Anpassung an Kabel unterschiedlicher Dicke möglich ist. Je dünner das Kabel ist, umso mehr sind die beiden Schrägflächen einander anzunähern, was aber auch der Tatsache entspricht, dass bei einem dünneren Kabel die Überwurfmutter über eine größere axiale Strecke anzuziehen ist, um die gewünschte Klemmwirkung zu erzielen. Es wird also automatisch je nach Dicke des Kabels auch die Verschwenkung des oder der Kontaktfinger angepasst. Dabei kann gegebenenfalls zwischen einem Absatz des Klemmeinsatzes, der in die Schraubhülse eingreift, und der auf der Seite der Überwurfmutter befindlichen Stirnseite der Schraubhülse ein in Ausgangsstellung vorgesehener Abstand ebenfalls verringert werden, wobei sich Klemmeinsatz und Schraubhülse bei stärkster Anziehung der Überwurfmutter berühren können, falls die Verformung des Absatzes der Klemmeinrichtung begrenzt werden soll. Zweckmäßigerweise ist jedoch der Abstand zwischen der Stirnseite der Schraubhülse und dem Absatz des Klemmeinsatzes so groß, dass die größtmögliche Verformung des Absatzes durchführbar bleibt.

Zweckmäßig ist es, wenn die Kontaktfinger in Fortsetzung des gewölbten oder eckig geformten Absatzes in Ausgangsstellung geradlinig und insbesondere parallel zur Längsmittelachse der Kabelverschraubung verlaufen. Sie können also bei einer vorteilhaften Ausgestaltung in Ausgangsstellung etwa auf einem gedachten Zylinder und außerdem auch parallel zueinander angeordnet sein, wobei die Innenabmessung dieses Zylinders gleich oder bevorzugt größer als die Außenabmessung des Kabels ist, so dass dieses zunächst problemlos eingeführt beziehungsweise die Kabelverschraubung auf dieses Kabel aufgesteckt werden kann, ohne dass eine Reibung oder eine größere Reibung zwischen der Kabelaußenseite und den Kontaktfingern auftritt.

Die freien Enden der Kontaktfinger können von der Längsmitte der Kabelverschraubung wegverformt, abgewinkelt oder gekrümmt sein. Somit ergibt sich auch bei der Verschwenkung des oder der Kontaktfinger zu der Oberfläche eines Kabels hin eine gute Anlage des oder der Kontaktfinger, wobei die freien Stirnseiten der Enden der Kontaktfinger nicht in die Kabeloberfläche eingedrückt werden.

Der die Kontaktfinger aufweisende Träger oder Ring kann als Lasche oder als die Kontaktfinger miteinander verbindende Hülse ausgebildet sein, die an dem ihr zugewandten Bereich des Klemmeinsatzes in Einsteckrichtung des Kabels vor der schrägen Anschlagfläche und vor der schrägen Druckfläche befestigt oder gelagert ist. Es ist also möglich, den Ring oder die Hülse, welche die Kontaktfinger trägt, beispielsweise auf den Klemmeinsatz an dessen Endbereich aufzustecken, der seiner die schräge Druckfläche aufweisenden Stirnseite benachbart ist. Dies erleichtert die Montage, weil dann der Klemmeinsatz zusammen mit diesem Träger oder Ring der Kontaktfinger in die Schraubhülse eingeschoben werden kann.

Der die Kontaktfinger tragende Ring oder Träger kann mit dem Klemmeinsatz durch eine Klemm- und/oder Rast- und/oder Schnappverbindung oder durch Kleben verbunden sein. Somit ist er bei dem Einfügen des Klemmeinsatzes in die Schraubhülse genügend fest gehalten, um durch diesen Vorgang des Einsteckens des Klemmeinsatzes automatisch in seine Gebrauchsstellung zu gelangen.

Bei einer abgewandelten Ausführungsform könnte der Klemmeinsatz an seinem dem Träger der Kontaktfinger zugewandten Endbereich eine koaxiale oder konzentrische Nut aufweisen, die den die Kontaktfinger tragenden Träger oder Ring insbesondere klemmend oder rastend oder mittels Schnappverbindung aufnimmt. Dies ergäbe eine noch bessere Vormontage der Kontakteinrichtung.

Der Ring oder die Lasche mit den Kontaktfingern kann vor der Montage eben ausgebildet und bei der Montage ringförmig in die Kabelverschraubung einsetzbar sein. Somit kann es sich um ein Stanzteil handeln, welches eine ebene Abwicklung bildet und durch die Montage seine Ringform erhält.

Vor allem bei Kombination einzelner oder mehrerer der vorbeschriebenen Merkmale und Maßnahmen ergibt sich eine Kabelverschraubung mit einem bevorzugt aus elektrisch nicht leitfähigem Material vorstehenden Klemmeinsatz sowie Kontaktfingern aus elektrischem Werkstoff, die durch das Anziehen der Überwurfmutter oder Druckschraube der Kabelverschraubung gegen ein zuvor eingefügtes Kabel und dessen Abschirmung angedrückt werden können, ohne dass zusätzlich innerhalb der Kabelverschraubung bewegbare Ringteile oder Abstützelemente benötigt werden.

Nachstehend sind Ausführungsbeispiele der Erfindung anhand der Zeichnung näher beschrieben. Es zeigt in zum Teil schematisierter Darstellung:
- Fig. 1: eine teilweise im Längsschnitt und teilweise in Seitenansicht gezeigte erfindungsgemäße Kabelverschraubung mit eingesetztem Kabel, bei welchem ein Bereich derart abisoliert ist, dass seine Abschirmung frei liegt, vor dem Anziehen einer Überwurfmutter und Anpressen des Klemmbereichs eines Klemmeinsatzes und dem Andrücken von Kontaktfingern an die Abschirmung,
- Fig. 2: in vergrößertem Maßstab den in Figur 1 durch einen strichpunktierten Kreis K markierten Bereich der Schraubhülse der Kabelverschraubung mit einer dort angeordneten schrägen Anschlagfläche und mit einer analog abgeschrägten Stirnseite des Klemmbereichs sowie mit einem dazwischen befindlichen zu der Kontakteinrichtung gehörenden verformbaren Absatz, der in Ausgangslage im Längsschnitt eine konvexe Wölbung hat und in dieser Ausgangslage gemäß seiner Wölbung von der schrägen Anschlagfläche beabstandet ist,
- Fig. 3: eine der Figur 1 entsprechende Darstellung einer abgewandelten Ausführungsform der erfindungsgemäßen Kabelverschraubung,
- Fig. 4: in vergrößertem Maßstab eine der Figur 3 entsprechende Darstellung der abgewandelten Ausführungsform, bei welcher der verformbare Absatz im Längsschnitt eine eckige Form hat und dadurch ebenfalls in dieser Ausgangsstellung zunächst von der schrägen Anschlagfläche beabstandet ist,
- Fig. 5: eine den Figuren 1 und 3 entsprechende Darstellung der erfindungsgemäßen Kabelverschraubung nach dem Anziehen der Überwurfmutter und der dadurch bewirkten axialen Relativverstellung zwischen Klemmeinsatz und Schraubhülse, wodurch die konvexe Wölbung oder die eckige Form des verformbaren Absatzes der Kontakteinrichtung begradigt und gegen die schräge Anschlagfläche bewegt beziehungsweise an diese angedrückt und das Kabel geklemmt sind,
- Fig. 6: eine den Figuren 2 und 4 entsprechende Darstellung der Verformung und Verbiegung des verformbaren Absatzes und der damit einhergehenden Biegeschwenkung der Kontaktfinger radial nach innen an den abgeschirmten Teil des Kabels in dessen geklemmter Position,
- Fig. 7: die einzelnen Teile der erfindungsgemäßen Kabelverschraubung vor deren Zusammenfügung und Montage, wobei eine elektrisch leitfähige Kontakteinrichtung mit Kontaktfingern mit einem nicht elektrisch leitfähigen Klemmeinsatz zusammengesteckt und verbunden ist, sowie
- Fig. 8: eine der Figur 7 entsprechende Darstellung, bei welcher die die Kontaktfinger aufweisende Kontakteinrichtung ein loses, beim Zusammenfügen der Kabelverschraubung in diese einsetzbares Einzelteil ist.

Bei der nachfolgenden Beschreibung unterschiedlicher Ausführungsbeispiele erhalten hinsichtlich ihrer Funktion übereinstimmende Teile auch bei abgewandelter Formgebung übereinstimmende Bezugszahlen.

Eine im ganzen mit 1 bezeichnete Kabelverschraubung dient zum Klemmen und Festlegen eines abgeschirmten Kabels 2, bei welchem ein Bereich 3 mit dem Abschirmgitter freigelegt ist, der sich in axialer Fortsetzung des Klemmbereichs und eines Klemmeinsatzes 4 sowie einer mit diesem zusammenwirkenden Dichtung 5 angeordnet ist.

Zum axialen und radialen Beschaufschlagen des Klemmeinsatzes 4 und zum radialen Verformen seines dem Bereich 3 abgewandten Klemmbereichs oder seiner Klemmfinger 6 ist eine Überwurfmutter 7 vorgesehen, die mit einer im Bereich des Durchgangs des Kabels 2 angeordneten inneren konischen Fläche 8 bei ihrer Axialverstellung den Klemmbereich oder die Klemmfinger 6 und die Dichtung 5 radial gegen das Kabel 2 andrückt und dieses klemmt. Dabei ist diese Überwurfmutter 7 in bekannter Weise mit ihrem Innengewinde relativ zu dem Außengewinde einer Schraubhülse 9 verdrehbar, was gleichzeitig die erforderliche relative Axialbewegung ergibt.

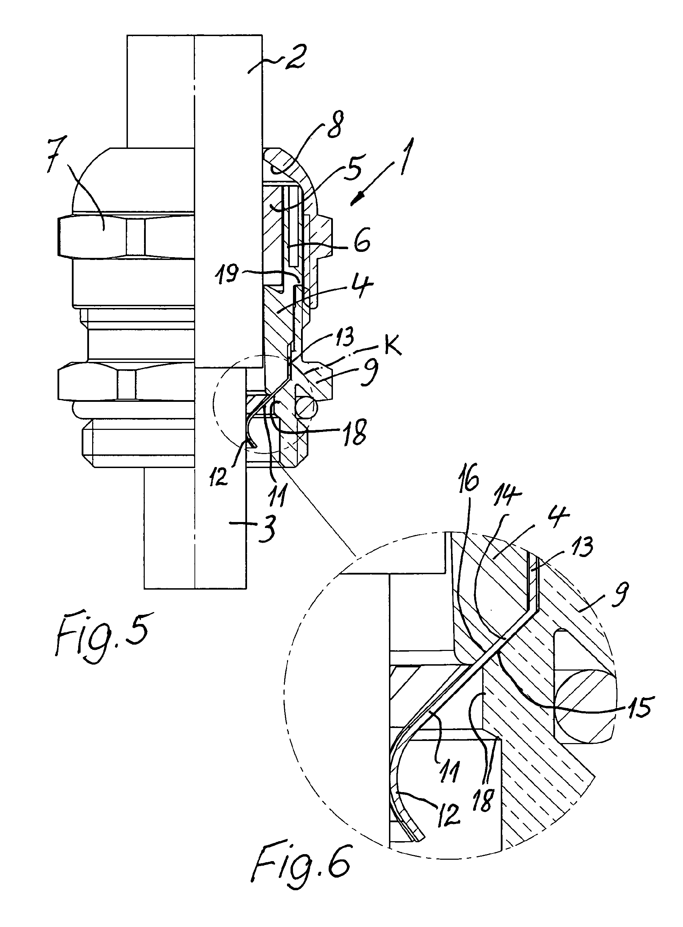

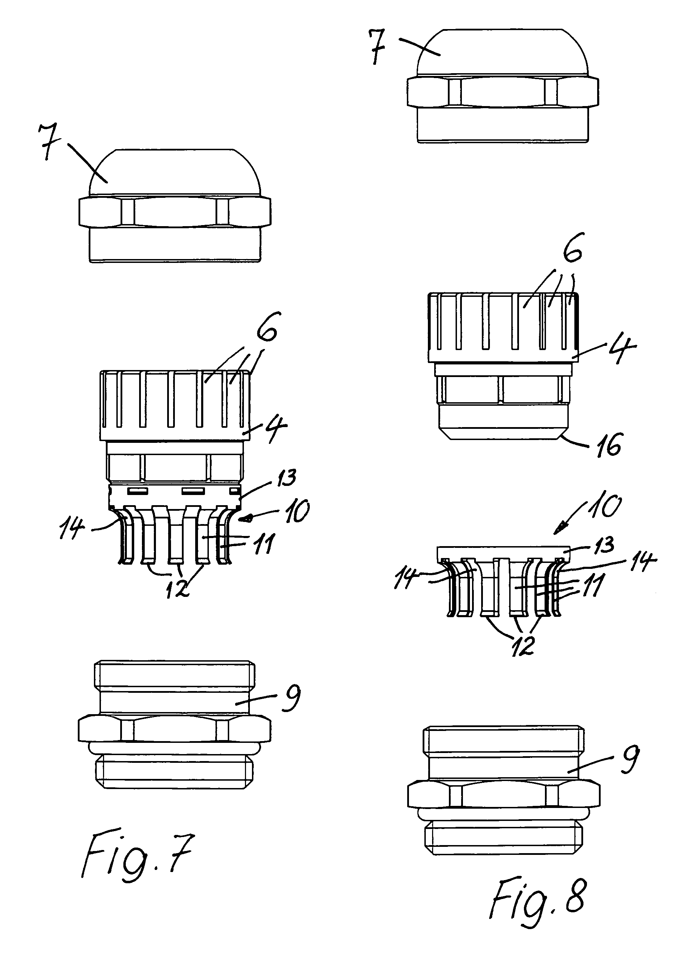

In der Schraubhülse 9 ist eine in den Figuren 7 und 8 noch einmal separat dargestellte, im ganzen mit 10 bezeichnete Kontakteinrichtung vorgesehen, die mehrere an ihrem Umfang und in Gebrauchsstellung am Umfang des Kabels 2 beziehungsweise seines Absatzes 3 verteilte Kontaktfinger 11 aufweist, die gemäß Figur 5 und 6 in Gebrauchsstellung an dem Bereich 3 mit der Abschirmung des Kabels 2 mit einem Teil ihrer Längenausdehnung, nämlich einem abgewinkelten oder abgerundeten Kontaktende 12, anliegen.

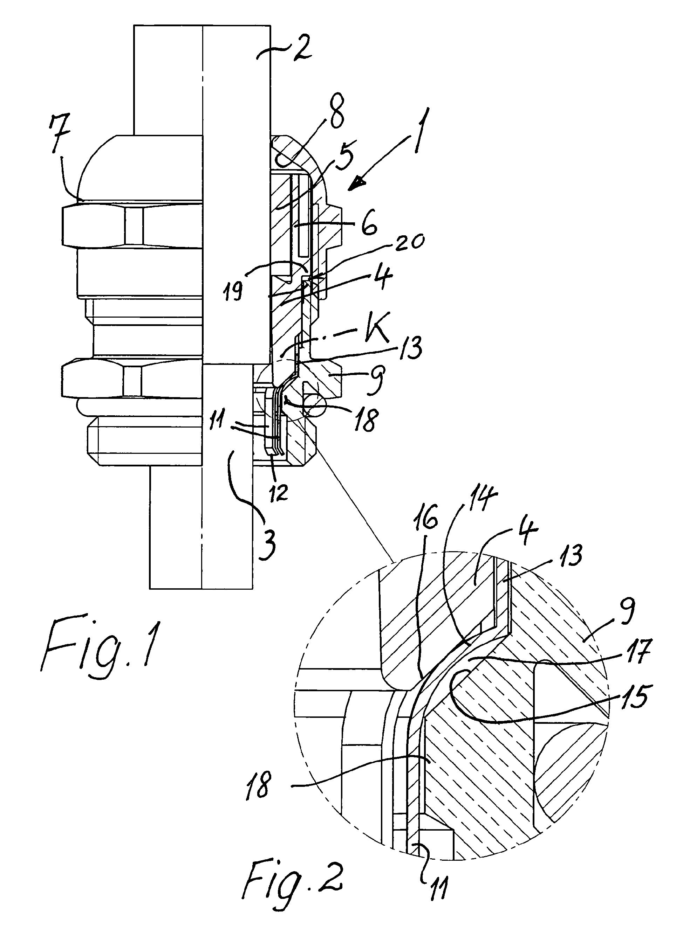

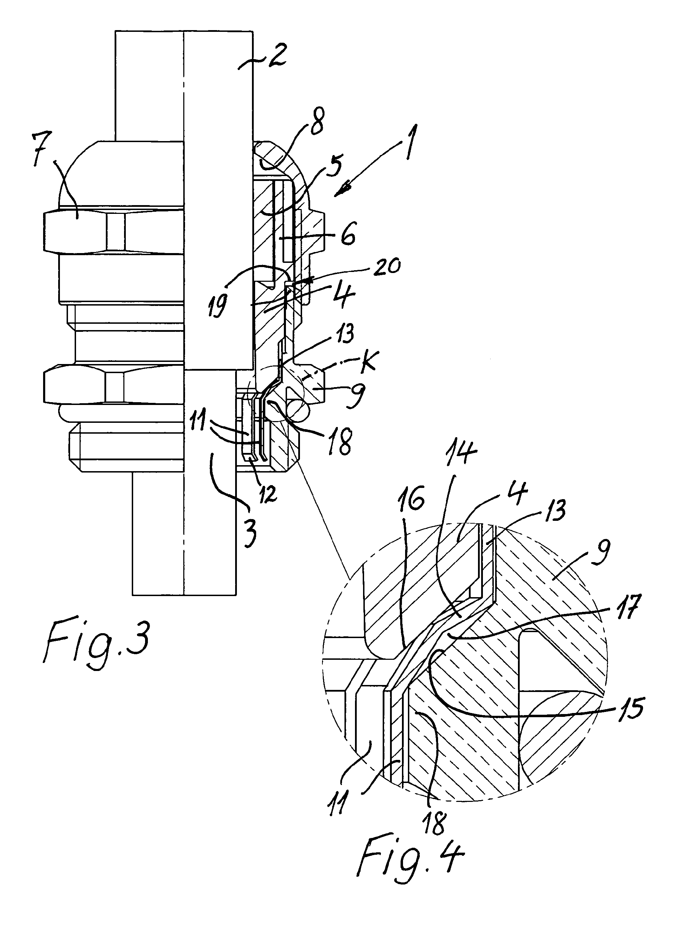

Vor allem in den Figuren 7 und 8, aber in Verbindung damit auch in den Figuren 2 und 4 erkennt man, dass die Kontakteinrichtung 10 einen in der Schraubhülse 9 angeordneten Träger oder Ring 13 und von diesem abgehende federnde Kontaktfinger 11 aufweist, die dem Träger oder Ring 13 in axialer Richtung benachbart einen verformbaren Absatz 14 haben, wobei jeder dieser Absätze 14 der Kontaktfinger 11 eine in Ausgangslage im Längsschnitt gemäß Figur 2 konvexe Wölbung oder gemäß Figur 4 eckige Form hat. In Fortsetzung dazu etwa in Einsteckrichtung des Kabels 2 verlaufen die Kontaktfinger 11 im wesentlichen geradlinig und zunächst etwa parallel zu dem Kabel 2 und seinem Bereich 3.

In dem Bereich oder an der Stelle, wo sich der verformbare Absatz 14 in Gebrauchsstellung innerhalb der Schraubhülse 9 befindet, ist in dieser eine radial nach innen und dabei in Einsteckrichtung des Kabels zu diesem geneigt oder schräg verlaufende Anschlagfläche 15 für den Absatz 14 der Kontaktfinger 11 angeordnet, was bei gemeinsamer Betrachtung der Figuren 1 bis 6 deutlich erkennbar ist. Dabei sieht man auch, dass diese Anschlagfläche 15 den Absatz 14 entgegen der Wirkrichtung der Überwurfmutter 7 auf der der Überwurfmutter entgegengesetzten Seite untergreift oder hintergreift.

Ferner erkennt man in den Figuren 1 bis 6 und dabei besonders gut in den Figuren 2, 4 und 6, dass der Klemmeinsatz 4 an der dem Absatz 14 zugewandten und diesen beaufschlagenden Stirnseite eine schräg zur Längsmittelachse der gesamten Kabelverschraubung 1 angeordnete Druckfläche 16 aufweist, wobei in Ausgangslage vor dem Verklemmen des Kabels 2 zwischen der Druckfläche 16 und der Anschlagfläche 15 ein Abstand besteht, innerhalb welchem sich der verformbare Absatz 14 befindet.

Beim axialen Beaufschlagen oder Eindrücken des Klemmeinsatzes 4 mit Hilfe der Überwurfmutter 7 wird der gewölbte oder eckig geformte Absatz 14 der Klemmfinger 11 auf seiner der Anschlagfläche 15 abgewandten Seite beaufschlagt und zwischen Anschlagfläche 15 und Druckfläche 16 derart verformt, dass er gegen die schräge Anschlagfläche 15 annäherbar oder andrückbar ist, wodurch der den Absatz 14 fortsetzende freie Teil der Kontaktfinger 11 radial nach innen in Richtung zur Längsmittelachse der Kabelverschraubung 1 verschwenkbar und an ein eingeführtes Kabel 2 beziehungsweise dessen Abschirmung 3 andrückbar ist (Fig. 5 und 6).

Dabei ist der gewölbte oder eckige Bereich 14 gemäß den Figuren 2 und 4 in den Ausführungsbeispielen so geformt, dass etwa die mittlere Zone an der Druckfläche 16 anliegt oder nah bei dieser angeordnet ist und gegenüber der Anschlagfläche 15 einen Zwischenraum oder Abstand 17 hat. Es wäre aber auch eine umgekehrte Krümmung und Formgebung möglich, bei welcher die Kontaktfinger 11 dann aber gegenüber diesem Absatz 14 noch eine Rückbiegung zu ihren freien Enden 12 hin benötigen.

Wird die Überwurfmutter 7 relativ zu der Schraubhülse 9 angezogen, also auch in axialer Richtung verstellt, führt dies auch zu einer Axialverstellung des Klemmeinsatzes 4. Dadurch werden Anschlagfläche 15 und Druckfläche 16 einander angenähert und somit der verformbare Bereich 14 mehr und mehr unter Verkleinerung des Abstandes 17 begradigt. Dies führt zwangsläufig zu einer Verschwenkung der Kontaktfinger 11 und ihrer Enden 12 in radialer Richtung an den die Abschirmung aufweisenden Bereich 3 des Kabels 2.

In den dargestellten Ausführungsbeispielen hat der verformbare Bereich 14 der Kontaktfinger 11 in Ausgangslage den Abstand 17 von der Anschlagfläche 15, berührt diese an deren Rändern und ist beim Anziehen der Überwurfmutter 7 oder einer Druckschraube zuerst von der Druckfläche 16 berührbar oder beaufschlagt. Wie bereits erwähnt, könnte der verformbare Bereich 14 aber auch entgegengesetzt gewölbt oder eckig geformt sein, so dass er in Ausgangslage den Abstand 17 von der Druckfläche 16 hätte und beim Anziehen der Überwurfmutter 7 oder einer Druckschraube zuerst von der Anschlagfläche 15 berührbar oder beaufschlagbar wäre.

Die schräge Anschlagfläche 15 ist in den Ausführungsbeispielen an einem innenseitigen Absatz 18 oder Ring oder Vorsprung oder Bund der Schraubhülse 9 angeordnet, welcher im Ausführungsbeispiel einstückig mit der Schraubhülse 9 verbunden ist und radial nach innen vorsteht. Somit ergibt sich ein gutes Widerlager für die Verformung des Absatzes 14 der Kontaktfinger 11. Die schräge Druckfläche 16 ist in den Ausführungsbeispielen unmittelbar an der den Klemmfingern 6 des Klemmeinsatzes 4 abgewandten Stirnseite dieses Klemmeinsatzes 4 angeformt. Somit ergibt sich eine einfache Ausführungsform bei welcher die beim Anziehen der Überwurfmutter 7 ohnehin stattfindende axiale Beaufschlagung des Klemmeinsatzes 4 zu einer geringfügigen Axialverstellung dieses Klemmeinsatzes 4 ausgenutzt wird, um dadurch den verformbaren Absatz 14 zu begradigen und die Kontaktfinger 11 radial nach innen zu verschwenken.

In den Ausführungsbeispielen sind die schräge Anschlagfläche 15 und die schräge Druckfläche 16 im Längsschnitt geradlinig ausgeführt, könnten aber auch einen von einer geraden Linie abweichenden Längsschnitt oder Verlauf haben. Beispielsweise könnte diejenige der beiden Schrägflächen, die den verformbaren Absatz 14 zuerst berührt, etwas ballig sein, um eine noch effektivere Verformung zu bewirken. Die zweite Schrägfläche könnte dabei eventuell konkav ausgeführt sein, um einen größeren Schwenkweg der Kontaktfinger 11 zu erlauben. Die geradlinige Gestaltung gemäß den Ausführungsbeispielen ist ein guter Kompromiss zwischen Effektivität und relativ einfacher Herstellbarkeit, wobei die schräge Anschlagfläche 15 und die schräge Druckfläche 16 ringförmig umlaufend und parallel zueinander angeordnet sind.

In den Figuren 1, 3, 7 und 8 erkennt man, dass die Kontaktfinger 11 in ihrer Ausgangslage in Fortsetzung des gewölbten oder eckig geformten Absatzes 14 geradlinig und parallel zur Längsmittelachse der Kabelverschraubung verlaufen. Denkbar wäre aber, dass sie auch schon eine leicht schräge, sich dem Kabelverlauf annähernde Ausgangslage haben.

Die freien Enden 12 der Kontaktfinger 11 sind von der Längsmitte der Kabelverschraubung 1 weg verformt, abgewinkelt oder gekrümmt, um eine gute Kontaktberührung mit dem Abschirmgeflecht des Bereichs 3 zu erlauben, wie es in Figur 6 dargestellt ist.

Der Träger oder Ring 13 ist als die Kontaktfinger 11 miteinander verbindende Hülse ausgebildet, die an dem ihr zugewandten Bereich des Klemmeinsatzes 4 in der relativen Einsteckrichtung des Kabels 2 vor der schrägen Anschlagfläche 15 und auch vor der schrägen Druckfläche 16 befestigt oder gelagert ist. Dabei kann dieser Ring oder Träger 13 mit dem Klemmeinsatz 4 gemäß Figur 7 durch eine Klemm- und/oder Rast- und/oder Schnappverbindung oder durch Kleben oder in anderer geeigneter Form, auch fest, fest verbunden sein, jedoch kann er auch gemäß Figur 8 als loses Steckteil ausgebildet sein, welches bei der Montage in der in Figur 8 erkennbaren Reihenfolge in die Schraubhülse 9 zwischen deren Absatz 18 und dem Klemmeinsatz 4 einsetzbar ist. Diese Ausbildung gemäß Figur 7 oder 8 ermöglicht es, einen Klemmeinsatz 4 aus elektrisch nicht leitendem Werkstoff mit Kontaktfingern 11 und deren Träger 13 aus elektrisch leitendem Werkstoff zu kombinieren, so dass die gewünschte Kontaktierung in Gebrauchsstellung stattfindet.

In den Figuren 1 und 3 erkennt man noch zwischen der der Überwurfmutter 7 zugewandten Stirnseite der Schraubhülse 9 und einem innenliegenden Absatz 19 des Klemmeinsatzes 4 einen Abstand 20, der die gewünschte Relativbewegung zwischen Klemmeinsatz 4 und Schraubhülse 9 ermöglicht und nach dem Anziehen der Überwurfmutter gemäß Figur 5 verschwunden ist. Diese Stelle wirkt also auch als axialer Anschlag. Der Absatz 20 ist dabei in axialer Richtung so groß bemessen, dass die erforderliche Annäherung der schrägen Flächen 15 und 16 in ausreichendem Maße oder soweit erfolgen kann, dass zwischen diesen Flächen nur noch der begradigte verformbare Absatz 14 vorhanden und der dort ursprünglich vorgesehene Abstand 17 verschwunden ist.

Die Kabelverschraubung 1 für ein abgeschirmtes Kabel 2 weist in üblicher Weise eine Schraubhülse 9 und einen darin eingreifenden Klemmeinsatz 4 sowie eine Überwurfmutter 7 oder Druckschraube auf, die den über die Schraubhülse 9 überstehenden Bereich des Klemmeinsatzes 4 axial und radial beaufschlagt und seinen Klemmbereich oder seine Klemmfinger 6 radial verformt. Dabei enthält die Schraubhülse 9 eine Kontakteinrichtung 10 mit einem oder mehreren Kontaktfingern 11 die in Gebrauchsstellung an der Abschirmung des Kabels 2 kontaktierend anliegen. Die Kontakteinrichtung 10 weist einen in Gebrauchsstellung in der Schraubhülse 9 angeordneten Träger oder Ring 13 mit dem oder den federnden Kontaktfingern 11 auf, wobei diese Kontaktfinger 11 ihrem Träger oder Ring 13 in axialer Richtung benachbart jeweils einen verformbaren Absatz 14 mit einer in Ausgangslage im Längsschnitt konvexen Wölbung oder eckigen Form haben und in Fortsetzung dazu nach einer entsprechenden Umbiegung etwa in Orientierungsrichtung des Kabels 2, also in seiner relativen Einsteckrichtung, verlaufen. Im Bereich des Absatzes 14 ist eine geneigt oder schräg verlaufende Anschlagfläche 15 zum Untergreifen des Absatzes 14 und direkt oder indirekt an dem Klemmeinsatz 4 eine diesem Absatz 14 in Gebrauchsstellung zugewandte und ihn beaufschlagende Druckfläche 16 vorgesehen, wobei durch die Verringerung des Abstandes von Anschlagfläche 15 und Druckfläche 16 der gewölbte oder eckig geformte Absatz 14 im Sinne einer Begradigung verformbar ist, wodurch die Klemmfinger 11 wegen ihrer Abstützung auf dem Rand des Absatzes 18 radial zu dem Kabel 2 hin verschwenkt werden.

## Patentansprüche

1. Kabelverschraubung (1) für ein abgeschirmtes Kabel (2) mit einer Schraubhülse (9) und mit einem darin eingreifenden Klemmeinsatz (4) sowie mit einer Überwurfmutter (7) oder Druckschraube zum axialen und radialen Beaufschlagen des Klemmeinsatzes (4) und zum radialen Verformen seines Klemmbereiches oder seiner Klemmfinger (6), wobei in der Schraubhülse (9) eine Kontakteinrichtung (10) mit wenigstens einem oder mit mehreren am Umfang verteilten Kontaktfingern (11) vorgesehen ist, die in Gebrauchsstellung an der Abschirmung des Kabels (2) mit wenigstens einem Teil ihrer Längenausdehnung anliegen, wobei die Kontakteinrichtung (10) wenigstens einen in der Schraubhülse (9)der zusammengesetzten Kabelverschraubung (1) angeordneten Träger oder Ring (13) und wenigstens eine oder mehrere von diesem abgehende, federnde Kontaktfinger (11) aufweist, die dem Träger oder Ring (13) in axialer Richtung der Längsmittelachse der zusammengesetzten Kabelverschraubung (1) benachbart einen verformbaren Absatz (14) mit einer in Ausgangslage im Längsschnitt entlang der Längsmittelachse der zusammengesetzten Kabelverschraubung (1) konvexen Wölbung oder eckigen Form haben und in Fortsetzung dazu in Einsteckrichtung des Kabels (2) verlaufen, und im Bereich des Absatzes (14) eine radial nach innen und dabei in relativer Einsteckrichtung des Kabels (2) in die zusammengesetzte Kabelverschraubung (1) zu diesem geneigt oder schräg verlaufende Anschlagfläche (15) für den Absatz des oder der Kontaktfinger (11) vorgesehen ist und diesen entgegen der Wirkrichtung der Überwurfmutter (7) oder Druckschraube unter- oder hintergreift, dass der Klemmeinsatz (4) oder ein von diesem beaufschlagter Druckring an der dem Absatz (14) des/der Kontaktfinger (11) zugewandten Stirnseite eine schräg zur Längsmittelachse der zusammengesetzten Kabelverschraubung (1) angeordnete Druckfläche (16) aufweist, und **dadurch gekennzeichnet, dass** der Absatz (14) in Gebrauchsstellung zwischen der schräg verlaufenden Anschlagfläche (15) und der Druckfläche (16) verläuft und dass durch die Druckfläche (16) beim axialen Beaufschlagen und Eindrücken des Klemmeinsatzes (4) der gewölbte oder eckig verformte Absatz (14) des Kontaktfingers (11) auf dessen der Anschlagfläche (15) abgewandten Seite beaufschlagbar und derart verformbar ist, dass er gegen die schräge Anschlagfläche (15) oder Druckfläche (16) annäherbar oder andrückbar ist, wodurch der den Absatz (14) fortsetzende freie Teil des/der Kontaktfinger (11) radial nach innen in Richtung zur Längsmittelachse der zusammengesetzten Kabelverschraubung (1) verschwenkbar und an ein eingeführtes Kabel (2) beziehungsweise dessen Abschirmung (3) andrückbar ist.

2. Kabelverschraubung nach Anspruch 1, **dadurch gekennzeichnet, dass** der verformbare Bereich (14) des/der Kontaktfinger (11) in Ausgangslage einen Abstand (17) von der Anschlagfläche (15) oder von der Druckfläche (16) hat und beim Anziehen der Überwurfmutter (7) oder Druckschraube zuerst von der Druckfläche (16) oder von der Anschlagfläche (15) berührbar oder beaufschlagbar ist.

3. Kabelverschraubung nach Anspruch 1 oder 2, **dadurch gekennzeichnet**, die schräge Anschlagfläche (15) an einem innenseitigen Absatz (18), Ring oder/und an einem Vorsprung oder Bund der Schraubhülse (9) vorgesehen ist, der zumindest in der relativen axialen Einsteckrichtung des Kabels (2) fest oder einstückig mit der Schraubhülse (9) verbunden ist.

4. Kabelverschraubung nach einem der Ansprüche 1 bis 3, **dadurch gekennzeichnet, dass** die schräge Druckfläche (16) an der Stirnseite des Klemmeinsatzes (4) unmittelbar angeformt ist.

5. Kabelverschraubung nach einem der Ansprüche 1 bis 4, **dadurch gekennzeichnet, dass** die schräge Anschlagfläche (15) und/oder die schräge Druckfläche (16) im Längsschnitt geradlinig oder gekrümmt sind.

6. Kabelverschraubung nach einem der Ansprüche 1 bis 5, **dadurch gekennzeichnet, dass** die schräge Anschlagfläche (15) und die schräge Druckfläche (16) ringförmig umlaufend und parallel zueinander angeordnet sind.

7. Kabelverschraubung nach einem der Ansprüche 1 bis 6, **dadurch gekennzeichnet, dass** die Kontaktfinger (11) in Fortsetzung des gewölbten oder eckig geformten Absatzes (14) in Ausgangsstellung geradlinig und insbesondere parallel zur Längsmittelachse der Kabelverschraubung (1) verlaufen.

8. Kabelverschraubung nach einem der Ansprüche 1 bis 7, **dadurch gekennzeichnet, dass** die freien Enden (12) der Kontaktfinger (11) von der Längsmitte der Kabelverschraubung (1) weg verformt, abgewinkelt oder gekrümmt sind.

9. Kabelverschraubung nach einem der Ansprüche 1 bis 8, **dadurch gekennzeichnet, dass** der die Kontaktfinger (11) aufweisende Träger oder Ring (13) als Lasche oder als die Kontaktfinger (11) miteinander verbindende Hülse ausgebildet ist, die an dem ihr zugewandten Bereich des Klemmeinsatzes (4) in Einsteckrichtung des Kabels (2) vor der schrägen Anschlagfläche (15) und vor der schrägen Druckfläche (16) befestigt oder gelagert ist.

10. Kabelverschraubung nach einem der Ansprüche 1 bis 9, **dadurch gekennzeichnet, dass** der die Kontaktfinger (11) tragende Ring oder Träger (13) mit dem Klemmeinsatz (4) durch eine Klemm- und/oder Rast- und/oder Schnappverbindung oder durch Verkleben verbunden ist.

11. Kabelverschraubung nach einem der Ansprüche 1 bis 10, **dadurch gekennzeichnet, dass** der Klemmeinsatz (4) an seinem dem Träger oder Ring (13) der Kontaktfinger (11) zugewandten Endbereich eine koaxiale oder konzentrische Nut aufweist, die den die Kontaktfinger (11) tragenden Träger oder Ring (13) insbesondere klemmend oder rastend oder mittels Schnappverbindung aufnimmt.

12. Kabelverschraubung nach einem der Ansprüche 1 bis 11, **dadurch gekennzeichnet, dass** der Ring oder Träger (13) mit den Kontaktfingern (11) vor der Montage eben ausgebildet und bei der Montage ringförmig in die Kabelverschraubung (1) einsetzbar ist.

## Claims

1. Cable gland (1) for a shielded cable (2), comprising a screw sleeve (9) and a clamping insert (4) which engages therein, and a union nut (7) or pressing screw for acting upon the clamping insert (4) axially and radially and for radially deforming a clamping region or clamping fingers (6) thereof, a contact device (10) having at least one or having a plurality of contact fingers (11), which are distributed over the circumference, being provided in the screw sleeve (9), at least a portion of a longitudinal extent of said contact fingers bearing against the shielding of the cable (2) in the use position, the contact device (10) having at least one support or ring (13), which is arranged in the screw sleeve (9) of the assembled cable gland (1), and at least one or a plurality of resilient contact fingers (11) proceeding from said support or ring and, adjacent to the support or ring (13) in the axial direction of the longitudinal central axis of the assembled cable gland (1), have a deformable projection (14) having a convex curvature or an angled form in a starting position in the longitudinal section along the longitudinal central axis of the assembled cable gland (1), and, in a continuation therefrom, extend in the insertion direction of the cable (2), and a stop surface (15), which extends radially inwardly and in the relative insertion direction of the cable (2) into the assembled cable gland (1) in a manner inclined or obliquely with respect to said cable, for the projection of the contact fmger(s) (11) is provided in the region of the projection (14) and engages beneath or behind said projection against the direction of action of the union nut (7) or pressing screw, that the clamping insert (4) or a pressing ring which is acted upon by said clamping insert has, on the end face which faces the projection (14) of the contact finger(s) (11), a pressing surface (16) which is arranged obliquely with respect to the longitudinal central axis of the assembled cable gland (1) and **characterised in that** in the use position the projection (14) extends between the obliquely extending stop surface (15) and the pressure surface (16) and that by means of the pressure surface (16), when the clamping insert (4) is acted upon axially and pushed in, the curved or angularly deformed projection (14) of the contact finger (11) can be acted upon on the side thereof facing away from the stop surface (15), and is deformable in such a way that it can be moved closer to or pressed against the oblique stop surface (15) or the pressing surface (16), whereby the free part of the contact finger(s) (11) which continues the projection (14) can be pivoted radially inwardly in the direction of the longitudinal central axis of the assembled cable gland (1) and can be pressed against an inserted cable (2) or the shielding (3) thereof.

2. Cable gland as claimed in claim 1, **characterised in that** the reformable region (14) of the contact finger(s) (11) is located at a distance (17) from the stop surface (15) or from the pressing surface (16) in the starting position, and firstly can be contacted or acted upon by the pressing surface (16) or by the stop surface (15) when the union nut (7) or the pressing screw is being tightened.

3. Cable gland as claimed in claim 1 or 2, **characterised in that** the oblique stop surface (15) is provided on an inner-side projection (18), ring and/or on a protrusion or collar of the screw sleeve (9) which is connected fixedly or integrally to the screw sleeve (9) at least in the relative axial insertion direction of the cable (2).

4. Cable gland as claimed in any one of claims 1 to 3, **characterised in that** the oblique pressing surface (16) is directly integrally formed on the end face of the clamping insert (4).

5. Cable gland as claimed in any one of claims 1 to 4, **characterised in that** the oblique stop surface (15) and/or the oblique pressing surface (16) is straight or curved in longitudinal section.

6. Cable gland as claimed in any one of claims 1 to 5, **characterised in that** the oblique stop surface (15) and the oblique pressing surface (16) are arranged annularly circumferentially and in parallel with one another.

7. Cable gland as claimed in any one of claims 1 to 6, **characterised in that** the contact fingers (11), in a continuation of the curved or angularly formed projection (14), extend in a straight line and in particular in parallel with the longitudinal central axis of the cable gland (1) in the starting position.

8. Cable gland as claimed in any one of claims 1 to 7, **characterised in that** the free ends (12) of the contact fingers (11) are deformed, angled or bent away from the longitudinal centre of the cable gland (1).

9. Cable gland as claimed in any one of claims 1 to 8, **characterised in that** support or ring (13) which has the contact fingers (11) is formed as a lug or as a sleeve which connects the contact fingers (11) to one another and which is fastened to or mounted on the region of the clamping insert (4) which faces it in front of the oblique stop surface (15) and in front of the oblique pressing surface (16) in the insertion direction of the cable (2).

10. Cable gland as claimed in any one of claims 1 to 9, **characterised in that** ring or support (13) which bears the contact fingers (11) is connected to the clamping insert (4) by means of a clamping and/or latching and/or snap-action connection or by adhesive bonding.

11. Cable gland as claimed in any one of claims 1 to 10, **characterised in that** the clamping insert (4) has a coaxial or concentric groove on the end region thereof facing the support or ring (13) of the contact fingers (11), which groove accommodates the support or ring (13), which bears the contact fingers (11), in particular in a clamping or latching manner or by means of a snap-action connection.

12. Cable gland as claimed in any one of claims 1 to 11, **characterised in that** the ring or support (13) having the contact fingers (11) is formed in a flat manner before mounting and can be inserted into the cable gland (1) in the manner of a ring during mounting.

## Revendications

1. Presse-étoupe (1) pour un câble blindé (2) avec une douille à vis (9) et avec un insert de serrage (4) s'engageant dans celle-ci ainsi qu'avec un écrou de raccord (7) ou une vis de pression pour agir axialement et radialement sur l'insert de serrage (4) et pour déformer radialement sa zone de serrage ou ses doigts de serrage (6), dans lequel il est prévu dans la douille à vis (9) un dispositif de contact (10) avec au moins un doigt de contact ou avec plusieurs doigts de contact (11) répartis sur la périphérie qui, en position d'utilisation, s'appliquent sur le blindage du câble (2) avec au moins une partie de leur extension longitudinale, dans lequel le dispositif de contact (10) présente au moins un support ou un anneau (13) disposé dans la douille à vis (9) du presse-étoupe assemblé (1) et présente au moins un ou plusieurs doigts de contact à ressort (11) partant de celui-ci, qui comportent à proximité du support ou de l'anneau (13) en direction axiale de l'axe central longitudinal du presse-étoupe assemblé (1) un épaulement déformable (14) avec, en position initiale, une courbure convexe ou une forme polygonale en coupe longitudinale le long de l'axe central longitudinal du presse-étoupe assemblé (1) et qui s'étendent dans le prolongement de celui-ci dans la direction d'engagement du câble (2) et il est prévu dans la région de l'épaulement (14) une face de butée (15) s'étendant radialement vers l'intérieur et en l'occurrence de façon inclinée ou oblique par rapport à celui-ci dans la direction d'engagement relative du câble (2) dans le presse-étoupe assemblé (1), pour l'épaulement du ou des doigt(s) de contact (11) et s'engageant sous ou derrière celui-ci contre la direction d'action de l'écrou de raccord (7) ou de la vis de pression, dans lequel l'insert de serrage (4) ou un anneau de pression poussé par celui-ci présente sur le côté frontal tourné vers l'épaulement (14) du/des doigts(s) de contact (11) une face de pression (16) disposée en oblique par rapport à l'axe central longitudinal du presse-étoupe assemblé (1) et **caractérisé en ce que** l'épaulement (14) s'étend en position d'utilisation entre la face de butée orientée en oblique (15) et la face de pression (16) et **en ce que**, lors de la poussée ou l'enfoncement axial(e) de l'insert de serrage (4), l'épaulement (14) courbe ou de forme polygonale du doigt de contact (11) peut être poussé par la face de pression (16) sur son côté situé à l'opposé de la face de butée (15) et est déformable de telle manière qu'il puisse être rapproché de ou appuyé contre la face de butée oblique (15) ou la face de pression oblique (16), la partie libre du/des doigt(s) de contact (11) prolongeant l'épaulement (14) pouvant de ce fait pivoter radialement vers l'intérieur en direction de l'axe central longitudinal du presse-étoupe assemblé (1) et pouvant être pressée contre un câble introduit (2) ou contre son blindage (3).

2. Presse-étoupe selon la revendication 1, **caractérisé en ce que** la zone déformable (14) du/des doigts(s) de contact (11) présente en position initiale une distance (17) de la face de butée (15) ou de la face de pression (16) et peut être touchée ou poussée d'abord par la face de pression (16) ou par la face de butée (15) lors du serrage de l'écrou de raccord (7) ou de la vis de serrage.

3. Presse-étoupe selon la revendication 1 ou 2, **caractérisé en ce que** la face de butée oblique (15) est prévue sur un épaulement interne (18), un anneau interne, ou/et sur une saillie ou un bourrelet interne de la douille à vis (9) qui est assemblé à la douille à vis (9) de façon fixe au moins dans la direction d'engagement relative du câble (2) ou qui est réalisé d'un seul tenant avec celle-ci.

4. Presse-étoupe selon l'une quelconque des revendications 1 à 3, **caractérisé en ce que** la face de pression oblique (16) est formée directement sur le côté frontal de l'insert de serrage (4).

5. Presse-étoupe selon l'une quelconque des revendications 1 à 4, **caractérisé en ce que** la face de butée oblique (15) et/ou la face de pression oblique (16) sont rectilignes ou incurvées en coupe longitudinale.

6. Presse-étoupe selon l'une quelconque des revendications 1 à 5, **caractérisé en ce que** la face de butée oblique (15) et la face de pression oblique (16) sont disposées sous forme périphérique annulaire et parallèlement l'une à l'autre.

7. Presse-étoupe selon l'une quelconque des revendications 1 à 6, **caractérisé en ce que** les doigts de contact (11) s'étendant dans le prolongement de l'épaulement incurvé ou polygonal (14) sont en position initiale rectilignes et, en particulier, parallèles à l'axe central longitudinal du presse-étoupe (1).

8. Presse-étoupe selon l'une quelconque des revendications 1 à 7, **caractérisé en ce que** les extrémités libres (12) des doigts de contact (11) sont déformées, coudées ou incurvées pour s'écarter du milieu longitudinal du presse-étoupe (1).

9. Presse-étoupe selon l'une quelconque des revendications 1 à 8, **caractérisé en ce que** le support ou l'anneau (13) présentant les doigts de contact (11) est réalisé en forme de patte ou en forme de douille reliant les doigts de contact (11) l'un à l'autre qui est fixée ou appuyée sur la région de l'insert de serrage (4) tournée vers elle avant la face de butée oblique (15) et avant la face de pression oblique (16) dans la direction d'engagement du câble (2).

10. Presse-étoupe selon l'une quelconque des revendications 1 à 9, **caractérisé en ce que** le support ou l'anneau (13) portant les doigts de contact (11) est assemblé à l'insert de serrage (4) au moyen d'un assemblage par serrage et/ou par encliquetage et/ou à déclic ou par collage.

11. Presse-étoupe selon l'une quelconque des revendications 1 à 10, **caractérisé en ce que** l'insert de serrage (4) présente à sa région d'extrémité tournée vers le support ou l'anneau (13) des doigts de contact (11) une rainure coaxiale ou concentrique qui contient le support ou l'anneau (13) portant les doigts de contact (11) en particulier par serrage ou par encliquetage ou au moyen d'un assemblage à déclic.

12. Presse-étoupe selon l'une quelconque des revendications 1 à 11, **caractérisé en ce que** l'anneau ou le support (13) avec les doigts de contact (11) est configuré à plat avant le montage et peut être inséré sous forme annulaire dans le presse-étoupe (1) lors du montage.
